(19) Europäisches Patentamt
European Patent Office
Office européen des brevets

(11) **EP 2 485 875 B1**

(12) # EUROPEAN PATENT SPECIFICATION

(45) Date of publication and mention
of the grant of the patent:
**24.04.2013 Bulletin 2013/17**

(21) Application number: **10754755.6**

(22) Date of filing: **20.09.2010**

(51) Int Cl.:
**B25J 9/16** (2006.01)

(86) International application number:
**PCT/EP2010/063783**

(87) International publication number:
**WO 2011/042293 (14.04.2011 Gazette 2011/15)**

(54) **A METHOD FOR REDUCING THE ENERGY CONSUMPTION OF AN INDUSTRIAL ROBOT AND AN INDUSTRIAL ROBOT SYSTEM**

VERFAHREN ZUR VERRINGERUNG DES ENERGIEVERBRAUCHS EINES INDUSTRIEROBOTERS UND INDUSTRIEROBOTERSYSTEM

PROCÉDÉ DE DIMINUTION DE LA CONSOMMATION ÉNERGÉTIQUE D'UN ROBOT INDUSTRIEL ET SYSTÈME ROBOTIQUE INDUSTRIEL

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **06.10.2009 PCT/EP2009/062961**

(43) Date of publication of application:
**15.08.2012 Bulletin 2012/33**

(73) Proprietor: **ABB Technology AG**
**8050 Zürich (CH)**

(72) Inventors:
• **BJÖRKMAN, Mattias**
**S-722 46 Västerås (SE)**
• **NORRLÖF, Mikael**
**S-602 12 Norrköping (SE)**

(74) Representative: **Savela, Reino Aleksi**
**ABB AB**
**Intellectual Property**
**Ingenjör Bååths Gata 11**
**721 83 Västerås (SE)**

(56) References cited:
**EP-A1- 1 857 229    EP-A2- 1 705 541**
**US-B1- 6 408 224**

• **HIRAKAWA A R ET AL: "Trajectory generation for redundant manipulators under optimization of consumed electrical energy", CONFERENCE RECORD OF THE 1996 IEEE INDUSTRY APPLICATIONS CONFERENCE - 31ST IAS ANNUAL MEETING, IEEE SERVICE CENTER, US LNKD- DOI:10.1109/IAS.1996.559286, vol. 3, 6 October 1996 (1996-10-06), pages 1626-1632, XP010201236, ISBN: 978-0-7803-3544-8 cited in the application**

**Description**

FIELD OF THE INVENTION

The present invention relates to a method for reducing the energy consumption of an industrial robot configured to carry out work during a work cycle. Further, the present invention relates to an industrial robot system comprising a robot including a manipulator, and program storage for storing a control program defining work to be carried out by the robot during a work cycle.

PRIOR ART

An industrial robot is generally used for industrial automation. The robot is programmed to follow a movement path while the robot carries out work during a work cycle. A robot control program has information about what the robot should do and in which order tasks should be executed along the path. The control program comprises a series of robot program instructions written in a robot programming language. The control program has information about all target points on the movement path. The robot programming could be done online manually by teaching the robot positions and orientations of target points on the movement path. The control program could also be created by an offline programming and simulation tool running on an external computer, such as a PC.

An industrial robot system includes a manipulator having a plurality of arms that are movable relative each other about a plurality of axes and motors for actuating the movements of the axes and a robot controller having means for operating the manipulator. The robot controller comprises a storage unit for storing one or more control programs for controlling the movement of the manipulator. The control program comprises program instructions, including movement instructions for the manipulator. The control program specifies a geometric path to be followed by the robot when carrying out the work. The program may also specify limitations on speed and accelerations along the path. The geometric path can be expressed in joint angels or in Cartesian coordinates. The relation between the joint angels and the Cartesian coordinates are determined by a kinematic model of the robot. The geometric path specifies the positions of the robot, but not the speed.

The robot controller comprises a program interpreter configured to execute the control program and to provide instructions based on the movement instructions to a path planner. The path planner receives the instructions from the program interpreter and on basis thereof determines how the manipulator should move in order to be able to execute the movement instructions. The path planner generates a trajectory including a geometric path and a speed profile along the path. The path planner plans how the instructed movement should be performed by carrying out an interpolation of the movements. The interpolation includes dividing the instructed movement into a plurality of small increments, and computing the joint angles for all axis of the robot for each increment. The joint angels are then converted into reference values for the motors. The path planner transmits the computed motor references to drive units that control the motors by converting DC current to a variable alternating current in dependence on the motors references.

One important parameter for almost all robot applications is the cycle time. By cycle time is meant the time it takes for the robot to carry out a work cycle. It is important to make the control program as time optimal as possible in order to reduce the cycle time. Therefore, the normal path planning algorithms are based on a solution to an optimization problem that is defined as minimizing the cycle time subject to customer constraints and robot constraints, where customer constraints could be e.g. speed and acceleration values specified by the user. Some examples of robot constraints are maximum gear-box torque, maximum available motor torque, and maximum motor speed. This means that all available motor power is used in every discrete time step as long as no customer or robot constraint is violated.

Industrial robots are today used throughout almost all branches of industrial applications. As an asset among others, the robots contribute to the total environment impact of the plant, for example, due to its energy consumption. The energy consumption for a work cycle is dependent on the movements of the robot, such as the actual path, the velocity, and the acceleration of the robot during the work cycle. Accordingly, there is an aim to reduce the energy consumed by the robot.

An article "Trajectory generation for redundant manipulators under optimization of consumed electrical energy" written by Andre R Hirakawa and Atsuo Kawamura conference record of the 1996 IEEE Application conference, volume 3, 6 October 1996, pages 1626 - 1632, discloses a method for energy optimizing a trajectory with a fixed length in time for a robot having redundant degrees of freedom. D1 utilizes the internal self move due to the redundant kinematics to energy optimize and minimizes the deviation from a given Cartesian trajectory. One disadvantage with this method is that the geometrical path is only followed to a certain accuracy. Furthermore, if applied to a non redundant robot the only freedom to optimize is the deviation from the Cartesian trajectory. In applications at which it is important to follow a given geometric path, this method will have very small possibilities to reduce the energy consumption.

EP1 705 541 shows that it is possible to time optimize a time critical part of a work cycle and to reduce the speed of the robot during a non time critical part of the work cycle, in order to lower the energy consumption. During the non time critical part of the work cycle, the robot is run with as low speed as possible dependent on a determined maximum allowed time period. However, to reduce the speed does not necessarily reduce the energy consumed due to friction and gravity.

OBJECTS AND SUMMARY OF THE INVENTION

The object of the present invention is to further reduce the energy consumed by the robot when following a specified geometric path.

According to one aspect of the invention this object is achieved by the method defined in claim 1.

Such method comprises:

- defining a model for the energy consumption of the robot dependent on the movements of the axes of the robot, including a relation between the energy consumed due to friction and the speed of the axes, and the energy consumed due to gravity acting on the arms considering that the energy consumed due to gravity can be reduced during standstill of the manipulator or one or more of its axes if one or more of the axes are mechanically locked,
- storing a control program specifying a geometric path to be followed by the robot when carrying out the work,
- determining, during at least a part of the work cycle, speed profiles for the axes of the robot when following the specified geometric path with regard to minimizing the energy consumption of the robot and determining whether or not an axis should be mechanically locked during standstill in order to reduce the energy consumption, based on said model for the energy consumption of the robot, and a maximum allowed time for carrying out the robot movement during said part of the work cycle, provided that it is permitted to complete the geometric path in a shorter time than the maximum allowed time, and
- calculating reference values for the motors of the robot based on the determined speed profiles.

According to the present invention, the speed profile for the axes of the robot when following the specified geometric path is optimized with regard to minimizing the energy consumption of the robot. A speed profile for an axis includes information on the speed of the axis and how the speed changes over time, and accordingly information on the acceleration of the axis. The present invention optimizes the speed and acceleration of the manipulator, and not the geometric path. The geometric path is fixed, or can be allowed to vary within a mall tolerance interval. The present invention is advantageous to use for applications which rely on following a given path, for example, to avoid collisions with fixed obstacles in the robot work space.

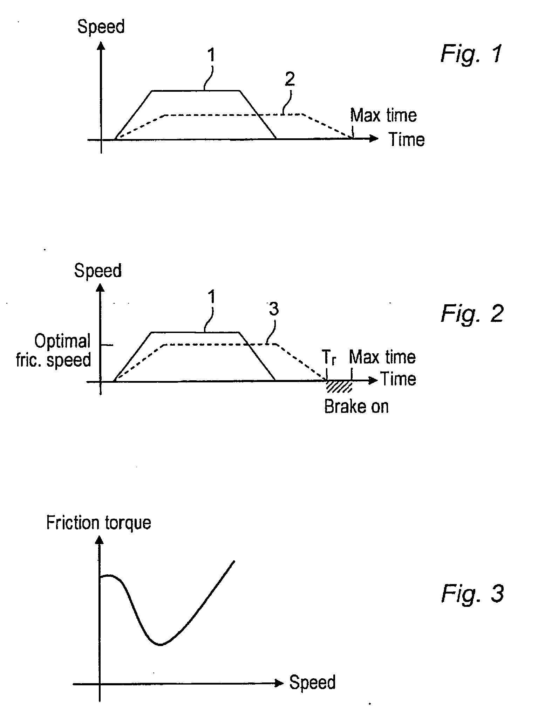

For a mechanical system, the power is proportional to the torque square and therefore friction plays an important role for the energy consumption. The model for the energy consumption of the robot includes a relation between the energy consumed due to friction and the speed of the axes. There exists a speed where the friction torque is at a minimum. When the speed of the manipulator is lower than the speed where the friction torque is at a minimum, the energy consumption will increase, as shown in figure 3. By using a model for the energy consumption that considers the energy consumption due to friction it is possible to determine robot speeds that minimizes the energy consumption. As a consequence, the time for the robot to carry out the robot movement can be shorter than the maximum allowed time. This possibility is used to further reduce the energy consumed. According to the invention, the optimization is carried out with the provision that it is permitted to complete the geometric path in a shorter time than the maximum allowed time, thereby making it possible to lock the axes of the robot when it is in a final position, and then switch off the control of the motors in order to save energy.

According to the invention, the fact that the energy consumed due to gravity can be significantly reduced when one or more of the axes are locked is considered during the optimization of the robot movements. The axes are mechanically locked, for example, by applying the brakes of the robot. Whether or not energy is saved depends on the length of the time period of the stand still. It takes some time to apply and release the brakes and preferably those times are also included in the model. If the time period of the stand still is too short, it is not possible to apply the brakes, or it costs more energy to apply the brakes than is saved. The optimization method determines whether or not an axis should be mechanically locked during a standstill in order to reduce the energy consumption. The axes can be mechanically locked during a stand still at any time during the energy optimized part of the work cycle, not only in the end of the movement. Preferably, the influence on the energy consumption when locking the axes is always considered during a stand still. This means that for some cases the energy consumption can be further reduced by increasing the speed. Accordingly, a further reduction of the energy consumption can be made.

The invention makes it possible to command optimization of the movements of the robot during at least a part of the work cycle with regard to minimizing the energy consumption of the robot and a maximum allowed time for carrying out the work. With the term during at least a part of the work cycle is meant during the whole or during one or more parts of the work cycle. The invention is suitable for robot applications for which the time is not critical during at least a part of the work cycle, for instance in applications where the robot is tending a machine and the robot spends a part of the work cycle waiting for the machine to be ready. The invention enables saving of energy for such applications. The maximum allowed time for carrying out the work is set in dependence on the application, for example, the minimum time the robot has to wait for the machine to be tended.

According to an embodiment of the invention the model for the energy consumption includes the time it takes to engage/disengage the mechanical lock of the axes of the manipulator, and is designed to take into consideration the time for the engagement/disengagement of the mechanical lock. Whether or not energy is saved depends on the length of the time period of the stand still. It takes some time to apply and release the brakes and preferably those times are also included in the model. If the time period of the stand still is too short, it is not possible to apply the brakes, or it costs more energy to apply the brakes than is saved.

According to an embodiment of the invention, movements for the manipulator are determined with regard to minimizing the energy consumption during a part of the work cycle, and movements for the manipulator are determined with regard to minimizing the time it takes for the robot to carry out the work during another part of the work cycle, and that reference values for the motors of the robot are calculated based on the robot movements determined with regard to minimizing the energy consumption of the robot as well as with regard to minimizing the time it takes for the robot to carry out the work. This embodiment makes it possible to switch between minimizing the cycle time and minimizing the energy consumption during one work cycle. This embodiment is advantageous for applications having one or more time critical parts and one or more non-time critical parts during the work cycle.

According to an embodiment of the invention, the control program includes instructions for switching on and off the minimizing of the energy consumption of the robot during the work cycle. This embodiment makes it possible for a robot programmer to command minimizing of the energy consumption during selected parts of the work cycle.

According to an embodiment of the invention, the method comprises calculating the energy reduction achieved by determining the movements of the manipulator with regard to minimizing the energy consumption of the robot instead of with regard to minimizing the cycle time, and displaying the calculated energy reduction. This embodiment enables a robot operator to view the energy reduction achieved and hopefully to encourage the robot operator to use this function.

According to an embodiment of the invention, the robot comprises drive units that control the motors by converting DC current to a variable alternating current in dependence on said reference values for the motors, and said model for the energy consumption of the robot includes a model of the energy consumption of mechanical parts of the manipulator, a model of the energy consumption of the motors, and a model of the energy consumption of the drive units.

According to another aspect of the invention this object is achieved by the industrial robot system defined in claim 8.

Such a robot system comprises:

- data storage storing a model for the energy consumption of the robot depending on the movements of the axes of robot, said model including a relation between the energy consumed due to friction and the speed of the axes, and the energy consumed due to gravity acting on the arms, and the model is designed to consider the fact that the energy consumed due to gravity acting on the arms can be reduced during standstill of the manipulator if one or more of the axes are mechanically locked, and

- an energy optimization module configured to, for at least a part of the work cycle, determine speed profiles for the axes of the robot, when following the specified geometric path and with regard to minimizing the energy consumption of the robot and to determine whether or not an axis should be mechanically locked during standstill in order to reduce the energy consumption based on said control program, said model for the energy consumption of the robot, and a maximum allowed time for carrying out the robot movement during said part of the work cycle, provided that it is permitted to complete the geometric path in a shorter time than the maximum allowed time, and

- a computing unit configured to calculate reference values for the motors of the robot based on the determined robot movements.

According to an embodiment of the invention, the system comprises a time optimization module configured to determine, for at least a part of the work cycle, movements for the manipulator with regard to minimizing the time it takes for the robot to carry out the work based on a dynamic model of the robot, the system is configured to upon command switch between minimizing the time it takes for the robot to carry out the work and minimizing the energy consumption of the robot during one work cycle, and said computing unit is configured to calculate reference values for the motors of the robot based on the robot movements determined with regard to minimizing the energy consumption of the robot as well as with regard to minimizing the time it takes for the robot to carry out the work.

According to an embodiment of the invention, the control program includes instructions for switching between minimizing the time it takes for the robot to carry out the work and minimizing the energy consumption of the robot during the work cycle, and the system is configured to switch between time and energy optimization based on the instructions in the robot program.

According to an embodiment of the invention, the system comprises an external computer for off-line programming of the robot and a robot controller for controlling the movements of the manipulator, said energy optimization module is configured to generate an energy optimized control program and the energy optimization module is stored on the external computer, and the computing unit for calculate reference values for the motors of the robot is stored on the robot controller. This embodiment makes it possible to optimize the control program with regard to minimizing the energy consumption during off-line programming of the robot. The output from the off-line programming is an energy optimized control program. An advantage with this embodiment is that it is easy to implement and there is no demand of the computational speed and accordingly it is possible to use a more demanding optimizing algorithm with a high accuracy.

According to an embodiment of the invention, the system comprises a robot controller including a path planner adapted to determine how the manipulator should move based on the control program, and said energy optimization module and the computing unit are parts of the path planner and are stored on the robot controller. According to this embodiment, the energy optimization of the movements is done in the robot controller during path planning. If the robot program is not programmed off-line it is an advantage from a user's point of view to perform the optimization on the controller instead of on an external computer. A further advantage is that the maximum allowed time can be a variable and, for example, it can depend on an input signal from an external unit. Another advantage with this embodiment is that it is possible to determine the trajectory with a higher accuracy compared to if the energy optimization is performed off-line due to the fact that the path planner determines the path based on small increments.

BRIEF DESCRIPTION OF THE DRAWINGS

The invention will now be explained more closely by the description of different embodiments of the invention and with reference to the appended figures.

Fig. 1        shows a time-optimized speed profile for a robot axis together with and an energy-optimized speed profile determined without regard to friction.

Fig. 2        shows the time-optimized speed profile of figure 1 together with an energy-optimized speed profile determined with regard to friction.

Fig. 3        shows an example of the relation between friction torque and speed.

Fig. 4        shows an example of a prior art robot controller.

Fig. 5        shows a robot system according to an embodiment of the invention.

Fig. 6        shows an example of energy optimization done on an external computer.

Fig. 7        shows a robot controller including an energy optimized trajectory generation that only optimizes the speed profile and not the geometric path.

Fig. 8        shows a robot controller generating an energy optimized trajectory includes determining an energy optimized geometric path as well as an energy optimized speed profile.

Fig. 9        shows an example of components in the robot system energy model.

Fig. 10      shows a simplified robot with only one rotational joint.

DETAILED DESCRIPTION OF PREFERRED EMBODIMENTS OF THE INVENTION

The present invention is based upon minimizing the energy consumption, instead of cycle time, and this can be described by the following optimization problem:

Minimize: Integral of Energy Consumption

Subject to: Customer Constraints

Robot constraints
$CycleTime \leq MaxCycleTime$

where MaxCycleTime is a user defined maximum cycle time for the robot movements. Customer constraints could be e.g. speed and acceleration values specified by the user. Robot constraints are, for example, maximum gear-box torque, maximum available motor torque, and maximum motor speed.

There are a number of robot applications where the robot is not the bottleneck and where the time between robot actions is predefined, depending on machines that the robot tends for example, and where it is logical to use a max time rather than a min time.

The solution to the optimization problem will be discussed in detail later, but now some general properties of the solution and the algorithms to find the solution will be presented.

The term energy optimization is in the following used as an equivalent of energy optimal or energy optimized motion planning, which means that the robot motions are planned in order to minimize the energy consumption.

The energy optimization can be switched on and off. When the energy optimization is switched off, the motion planning is made with regard to minimizing the cycle time. According to an embodiment of the invention the switching on and off of the energy optimization is commanded in the control program, for example by providing program instructions for switching on and off of the energy optimization. The energy optimization can be switched on per program, per module, per procedure, or per instruction.

The following is an example how the energy optimization can be used in program code of a control program.

```
MoveFromProcess1toProcess2:
   EnergyOptimizationOn maxMoveTime;
   MoveJ p10, v1000,  z10, tool10;
   MoveJ p20, v1000,  z5, tool10;
   MoveJ p30, v1000,  fine, tool10;
   EnergyOptimizatinOff\printEnergyReduction;
```

The energy optimization is turned on by the command EnergyOptimizationOn and is turned off by the command EnergyOptimizationOff. The two instructions EnergyOptimizationOn and EnergyOptimizationOff are included in a sequence of move instructions. EnergyOptimizationOn switches on the energy optimization and the second argument is the maximum time that the motion is allowed to take until the EnergyOptimizationOff instruction is executed. The program instructions in between a EnergyOptimizationOn and a EnergyOptimizationOff instructions are referred to as an energy-optimization block. The time, given by the variable maxMoveTime in the example, can change as a function of other related processes and hence the actual energy saving can be different at each execution of a particular energy-optimization block. Notice that it is not possible to change the maximum motion time parameter of the energy-optimization block once the control program execution has entered the block. The command printEnergyReduction initiates calculation of the energy reduction achieved by energy optimization instead of optimization of the cycle time, and displaying the calculated energy reduction.

Some comments on the solution from a user's perspective: If the maximum time for an energy-optimization block is too short, this means that the normal minimum cycle time criterion could not find a trajectory that satisfies the specified cycle time, the program execution will stop with an error message, e.g. "The time specified for the energy optimization is too short". "No trajectory exists with a cycle time < xx seconds". The "xx" is replaced with the time that it actually takes to perform the move instruction according to the optimization criterion. If a time close to "xx" is chosen in the EnergyoptimizationOn instruction not much freedom is left for the energy optimization and therefore a small reduction of energy will be achieved. When the optimization is performed an estimate of the energy reduction is computed and if the optional argument "printEnergyReduction" is given to the EnergyoptimizationOff command this value is printed, for example, on a teach pendant unit.

An important part of the optimization concept is to make it possible to apply a mechanical lock to the axis of the manipulator" such as the brakes of the robot, in the final position and then switch off the control of the motors in order to save energy. When the time specified in the EnergyoptimizationOn instruction is reached the brakes must already be released and the motors must be in controlled mode, in order to be responsive and be able to directly move at the next instruction after the energy-optimization block.

In a standard industrial robot configuration where the cycle time is minimized, the geometric path that the robot should follow is well defined from the robot control program. For energy optimization it is possible either to let the path be given by the robot program and optimize the speed profile, or let the geometric path be part of the optimization. This leads to two different cases in the optimization:

Case 1: The geometric path is given and only the dynamics can be affected in the optimization (this means the speed profile along the path).

Case 2: Only the start target and the end target are specified and the geometric path is free to choose in the optimization. Case 2 is not a part of the invention.

However, it is possible and useful to include a case where case 1 and case 2 are combined so that a geometric path is given where the robot can deviate from the path to some specified limit when it reduces the total energy consumption.

In the following example the resulting code with a maximum allowed deviation of 100mm from the desired geometric path is shown:

```
MoveFromProcess1toProcess2:
  EnergyOptimizationOn maxMoveTime\maxDeviation:=100;
  MoveJ p10, v1000,  z10, tool10;
  MoveJ p20, v1000,  z5, tool10;
  MoveJ p30, v1000,  fine, tool10;
  EnergyOptimizationOff \printEnergyReduction;
```

The optimization algorithm can be executed at different levels,

Level 1: Model based in an offline tool, for example, an external PC, and before the program is run on the robot controller.

Level 2: Model based but within the robot controller:

a. Pre-computation before the robot control program starts.
b. Online computation during executions of the control program.

The different versions of the solution will be described in detail later. The solution is similar in level 1 and 2a. The major difference between the different levels is the requirements on the computational complexity. In level 1 and to some extend level 2a there are not many restrictions on the computational complexity while level 2b put very hard restrictions on the computational complexity since the optimization must be solved while the robot moves and with the limited computer resources available in the robot controller.

Within an energy-optimization block the motion data is not allowed to change when the block is executed. No conditions, i.e. if-statements or loops, which can affect the path, are allowed. When entering an energy-optimization block the geometry of the path within the block has to be decided.

The important difference between level 1 and level 2, using model based optimization, is that in the execution at level 1 no data can be changed at the execution of the program while at level 2, motion data can change until the energy-optimization block is entered.

Figure 1 shows a time-optimized speed profile 1 together with and an energy-optimized speed profile 2 for a robot axis moving without being affected by gravity. The energy-optimized speed profile makes the robot reach the final point exactly at a specified maximum time.

Figure 3 shows a typical friction behavior with static friction, stiction, Coulomb and viscous friction. For a mechanical system the power produced is proportional to the torque square and therefore friction plays an important role for the energy consumption of the robot. In figure 3 a typical friction behavior is shown and obviously there exists a speed where the friction torque is at a minimum and hence it will result in a different speed profile compared to figure 1 if the energy optimization is done with regard to friction.

Figure 2 shows the time-optimized speed profile 1 of figure 1 together with an energy-optimized speed profile 3 determined with regard to friction. The resulting energy-optimized speed profile gives a higher acceleration and speed compared to the profile shown in figure 1 but still lower acceleration and speed compared to the time optimal profile. The energy-optimized speed profile 3 shows a motion that reaches the final position at a point in time $T_r$ that is before Max time. In the time from $T_r$ to Max time the mechanical brakes can be activated and hence no energy is consumed by the mechanical system during this time, which further reduces the total energy consumption. The energy that is regenerated when the robot is decelerating at the end of the motion, in for example figure 1, is in most cases wasted as electric energy through a resistor (creating the equivalent amount of heat energy). The energy-optimized solution has to consider this energy as well and minimize the wasted kinetic energy, in practice this will imply to reduce the speed, leading to the solution in figure 2. The resulting maximum speed will therefore be a trade-off between minimizing the wasted kinetic energy and minimizing the friction losses.

To further reduce the energy consumption it is possible to apply the brakes to one or more axes also during a robot motion if one or more axes are standing still during a time period long enough for the brakes to be applied and released.

The total reduction of energy can be computed by evaluating the optimization criterion for the time optimal trajectory and compare this with what is achieved in the energy optimal trajectory. The total reduction of energy is displayed.

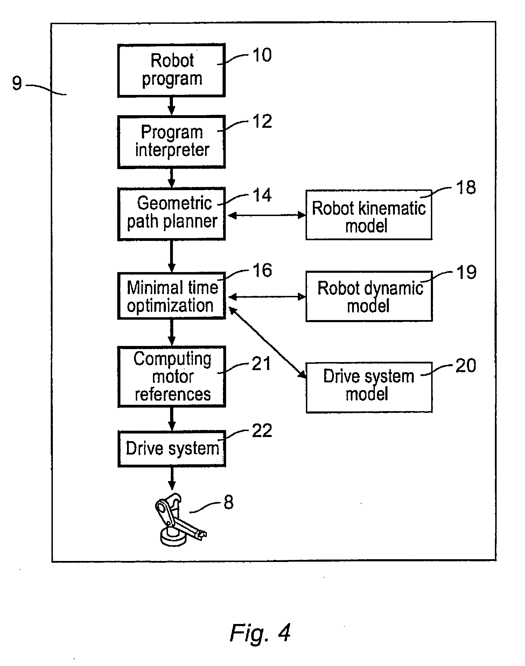

Figure 4 shows an example of a prior art robot system including a manipulator 8 having a plurality of arms that are movable relative each other about a plurality of axes and motors for actuating the movements of the axes, and a robot controller 9 for controlling the movements of the manipulator. The robot controller 9 includes program storage 10 for storing one or more control programs defining work to be carried out by the robot during a work cycle, and a program interpreter 12 configured to execute the control program.

The robot controller 9 further includes a path planner that receives the instructions from the program interpreter and on basis thereof determines how the manipulator should move in order to be able to execute the movement instructions. The path planner generates a trajectory including a geometric path and a speed profile along the path. The path planner comprises a geometric path planner 14 configured to plan a geometric path, i.e. the positions of the path, and a dynamic optimization planner 16 configured to plan the speed profile for the path with regard to minimizing the cycle time. The dynamic optimization planner 16 uses algorithms that are based on a solution to an optimization problem that is defined as minimizing the cycle time with subject to customer constraints and robot constraints. The controller 9 further comprises data storage 18,19,20 storing a robot kinematic model, a robot dynamic model and a drive system model. From the control program a geometric path is created using the robot kinematic model. The dynamic optimization planner uses the geometric path to create a time optimal speed profile using a dynamic model of the robot and a model of the robot drive system.

The path planner further comprises a computing unit 21 configured to calculate reference values for the motors of the robot based on the determined path and speed profile. The computing unit 21 carries out an interpolation of the generated trajectory. The interpolation includes dividing the trajectory into a plurality of small increments, and computing the joint angles for all axis of the robot for each increment. The joint angels are then converted into reference values for the motors. The computing unit 21 transmits the computed motor references to the drive system 22 of the robot controller. The drive system includes drive units that control the motors by converting DC current to a variable alternating current in dependence on the motors references.

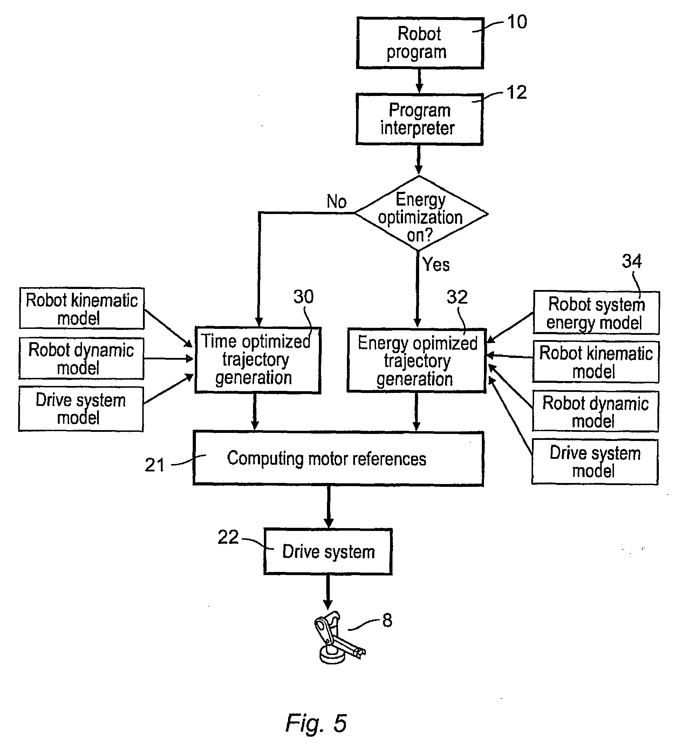

Figure 5 shows an example of a robot system according to the invention. A new additional condition is introduced to differentiate the trajectory generation in the traditional time optimized case from the new energy optimized case. In Figure 5 it is shown how the overall structure has to be modified in order to introduce the energy optimized trajectory generation in parallel with the present time optimized trajectory generation. The program interpreter detects whether energy optimization is commanded on or off. The energy optimization is, for example, turned on by the command EnergyOptimizationOn and is turned off by the command EnergyOptimizationOff enclosed in the control program. Energy optimization can be turned on and off several times during a work cycle. If energy optimization is turned off, the time optimized trajectory generation 30 is carried out for the motion instructions. The time optimized trajectory generation 30 determines time optimal movements for the robot and includes the steps of generating a geometric path based on a robot kinematic model and generating a time optimal speed profile based on a robot dynamic model and a drive system model. Input to the time optimization is a motion instruction.

If energy optimization is turned on the energy optimized trajectory generation 30 is started. The energy optimization is carried out on the program instructions in between the EnergyOptimizationOn and the EnergyOptimizationOff instructions, also called a program block. Input to the energy optimization is a program block and a maximum time for carrying out the block. The energy optimization is carried out based on all motion instructions in the program block and the maximum time for the block. The energy optimal trajectory generation determines energy optimized movements for the robot and includes the steps of generating a geometric path based on the robot kinematic model and an energy optimal speed profile based on a robot system energy model, the robot dynamic model, and the drive system model. The energy optimized movements for the robot is generated based on a maximum allowed time, such as maxMoveTime described above, for carrying out the movements, and robot and customary constrains. According to one embodiment of the invention, an energy optimized geometric path is generated as well as an energy optimized speed profile.

The robot system comprises a time optimization module 30 configured to carry out the time optimized trajectory generation and an energy optimization module 32 configured to carry out the energy optimized trajectory generation. The robot system comprises data storage 34 for storing the robot system energy model. The robot system energy model is a model of the energy consumption of the robot system in dependence on the movements of the axes of the robot. The robot system comprises a robot controller including a computing unit 21 configured to calculate reference values for the motors of the robot based on the determined movements.

8

Optimization of the movements of the robot with regard to minimizing the energy consumption of the robot means that the movements of the robot are determined with the aim of minimizing the energy consumption. Different degrees of reduction of the consumed energy can be achieved in dependence on how sophisticated the energy model is.

From the introduction to the energy optimization problem stated above it follows that the energy optimization can run at different levels in the robot system. Thus, the time optimal trajectory generation and the energy optimal trajectory generation can be done off-line on an external computer during programming of the robot, or in the robot controller during programming of the robot or during execution of the control program. Irrespective of whether the energy optimization is done on the controller or on an external computer, the computing of motor references is always done on the robot controller.

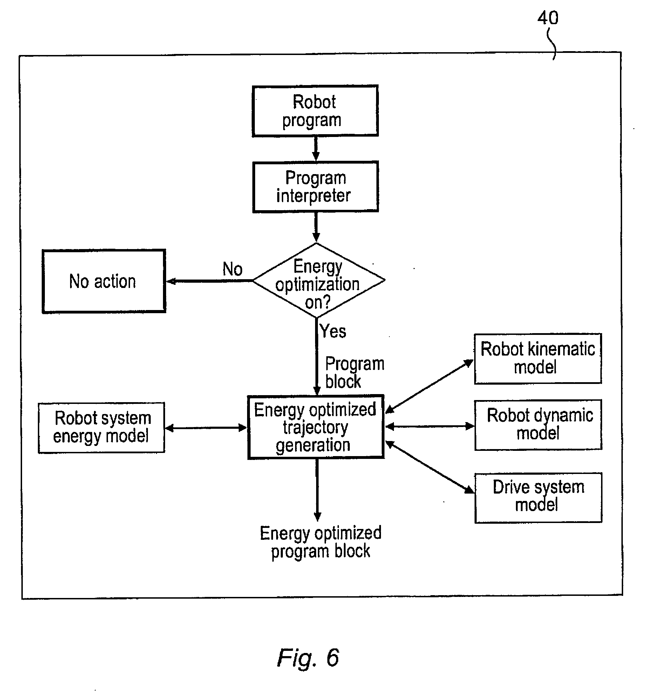

In figure 6, level 1, i.e. off-line energy optimization, is shown. The energy optimization is done off-line at an external computer 40, for example during off-line programming of the robot. Input at this level is a robot control program while the output is a new energy optimized control program including energy optimized robot move instructions. For program instructions where energy optimization is off, no change is made to the program instructions. If energy optimization is on, energy optimization is carried out on the program instructions in between the EnergyOptimizationOn and the EnergyOptimizationOff instruction, also called a program block. Output from the energy optimization is an energy optimized program block. The program block includes move instructions, and the energy optimized program block includes energy optimized program instructions. In addition an instruction to engage/disengage the brakes can be inserted in the program.

In the optimization the robot kinematic model, dynamic model, the model of the drive system and in addition a robot system energy model, is utilized. The energy optimized program can have the same path geometry as the original program if case 1 of the energy optimization is used or a modified geometry if case 2 or a combination of case 1 and case 2 is used. When the programming is finished, the control program is loaded to the robot controller. The offline energy optimization module takes a robot program as input and makes an energy optimization of the part of the program where the energy optimization is activated. Output from the energy optimization module is a new energy optimized robot program or part of a program. During execution of the energy optimized program in the robot controller, the path planner generates a motor references based on the movement instructions in the control program.

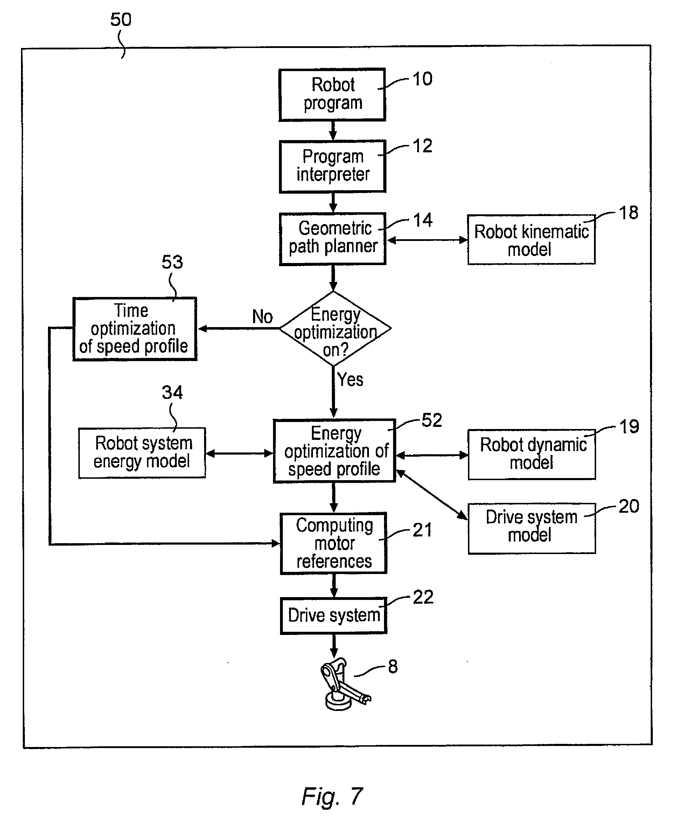

Figure 7 shows a robot controller 50 including an energy optimization that only optimizes the speed profile and the brake engage/disengage time instances but not the geometric path. In this case, the robot move instructions of the control program specify the geometry of the robot motion while the speed profile and the brake engage/disengage time instances are optimized to achieve minimal energy consumption. The path planner includes a geometric path planner 14 that generates a geometric path based on the move instructions in the control program and a robot kinematic model. The path planner also includes an energy optimization module 52 configured to generate an energy optimized speed profile based on the geometric path description, the robot dynamic model, the model of the drive system and the robot system energy model. The path planner also includes a time optimization module 53 configured to generate a time optimized speed profile based on the robot dynamic model and the drive system model. If energy optimization is turned on the energy optimization module 52 is used for generating the speed profile and brake engage/disengage time instances while if energy optimization is turned off, the time optimization module is used for generating the speed profile.

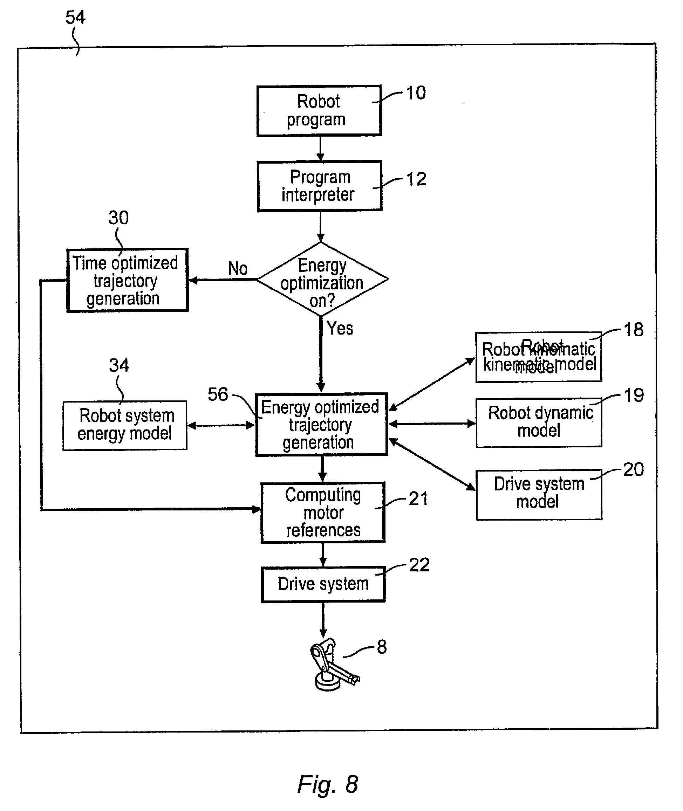

Figure 8 shows a robot controller 54 including a path planner 56 adapted to generate an energy optimized trajectory. The generation of the energy optimized trajectory includes determining an energy optimized geometric path as well as an energy optimized speed profile. In this case the geometry of the path is free to decide in the energy optimization. The robot program provides the start and end robot configuration, next the energy trajectory optimization finds an energy optimal path and speed profile for the robot. The optimization utilizes the robot kinematic model, the dynamic model, the drive system model, and finally the robot system energy model, to solve for the energy optimal trajectory.

When the optimization runs at level 2, case 1 and case 2 of the optimization principle can be described as in figure 7 and 8. In case 1 the geometry is still generated by the geometric path planner using the robot kinematic model while the time optimization is replaced by the energy optimization which utilizes the robot dynamic model, the drive system model and the robot system energy model. The resulting motor reference is fed down to the drive system 22 as a reference for the motors of the robot manipulator 8. In case 2, figure 8, also the geometry is a free parameter for the energy optimization to decide. This means that the geometric path planner is now a part of the energy-optimization block 56 and input to this block is a robot program, output is a reference to the drive system. The energy optimization utilizes in case 2, the robot kinematic model, the robot dynamic model, the drive system model, and finally the robot system energy model.

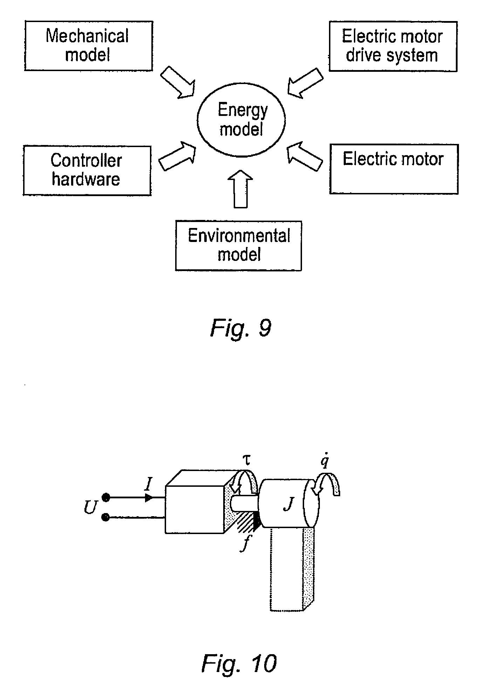

The energy model is a model of the energy consumption of the complete robot system; this includes the mechanical manipulator, the electric motors and the electric drive system. It could also take into account other resources in the system such as fans and processors that can be switched on and off or be controlled depending on the current status of the system. In Figure 9 a block diagram for the energy model is shown. The model includes a mechanical model, an electric drive system model, a motor model, and a controller hardware model. Further, the model includes an environmental model, for example, the surrounding temperature can be measured and used as an input to calculations of the friction.

The mechanical model contains the robot dynamic model including friction model. However, the mechanical model in the energy model could have a more sophisticated friction model than the prior art mechanical models. The electric drive system model and the motor model are extensions to the drive system model which could include the energy flow (reuse of energy) between motors at acceleration/deceleration. An energy dissipation model is also included in the electric motor model, this model include friction in the motor but also the actual efficiency of the motor. The controller hardware model is a model of the energy consumption in the controller hardware, such as fans, CPU-boards, etc. The model also includes a model of the brakes; engage/disengage times as well as power consumption in engaged and disengaged mode.

The detailed description will be divided in two sections. In the first section a simplified version of the problem is solved to introduce the concepts of the solution and to explain on what the solution relies. In the second section the same problem is introduced and the solution is described for a complete, realistic robot model.

Simplified case

Figure 10 shows a simplified robot with only one rotational joint and illustration of two domains, electrical and mechanical. The use of an optional arm is also illustrated and with this option the example becomes the same as the motion of a robot (axis 3 of an articulated 6-DOF robot for example).

In this case a simplified system according to figure 10 is used where the mechanical part is described by

$$J\ddot{q} + d(q) + f(\dot{q}) = \tau \qquad\qquad (1)$$

where J is the inertia (matrix or scalar depending upon the number of degrees of freedom of the corresponding system), $q$ the arm angle. The term $d(q)$ represent the gravity term when an arm is attached to the load, as shown in figure 10. $f(\dot{q})$ is the friction torque and $\tau$ represents the actuator torque, generated by, for example, an electrical motor. The electrical part described by the DC-motor equation:

$$L\dot{i} + Ri + u_m = u$$

With i the circuit current, $u$ the input voltage, $L$ the motor inductance, $R$ the motor resistance and $u_m$ the back EMF (electric motor back electromotive force) generated according to the following equations:

$$\tau = ki, \quad u_m = k\dot{q}$$

where $k$ is the torque constant. In addition a dissipation term should be added in the energy model, in general this term is a nonlinear function $h(i,u_m)$ of the current and the back EMF.

The friction can be described as

1) only viscous friction, $f(\dot{q})=f_m\dot{q}$
2) model with Coulomb friction and viscous friction, such as the Lugre-model suggested by Canudas de Wit, C., *Olsson, H., Åström, K., and Lischinsky, P. (1995). "A new model for control of systems with friction." IEEE Transactions on Automatic Control, 40(3):419-425, or the one suggested by B. Feeny, and F. Moon. (1994). "Chaos in a forced dry-friction oscillator: Experiments and numerical modelling." Journal of Sound and Vibration, 170(3):303-323.

$$f(\dot{q}) = f_m\dot{q} + f_c\left(\mu_k + (1-\mu_k)\cosh^{-1}(\beta\dot{q})\right)\tanh(\alpha\dot{q})$$

In terms of the equations describing the system dynamics the optimization problem can now be stated as

$$\min \int P dt$$
$$s.t. \quad \begin{array}{l} \dot{x} = f(x,u) \\ u \in U \end{array} \qquad\qquad (2)$$

where $x$ is the state of the dynamic system, $u$ is the input to the system, $f$ is a non-linear function, and $P$ can be divided into $P$-electrical and $P$-mechanical, $P$-electrical is the total energy consumed by the system and $P$-mechanical is only the mechanical part. To be able to explicitly state the energy model in this case it necessary to, again, write down the equations describing the electric motor model:

$$u = L\dot{i} + Ri + u_m + h(i, u_m)$$

and the motor drive system model:

$$u = K_p(i_{ref} - i) + K_I \int (i_{ref} - i)dt = K_p(\frac{\tau}{k} - i) + K_I \int (\frac{\tau}{k} - i)dt$$

where $K_p$ and $K_I$ are the current controller proportional and integral gains. The current reference is simply the torque t computed from:

$$J\ddot{q} + d(q) + f(\dot{q}) = \tau$$

It is assumed that the current controller is fast so that i follows $i_{ref}$ well. To conclude, the energy model can now be formulated as

$$E = \int P dt = \int u i dt$$
$$u = L\dot{i} + Ri + u_m + h(i, u_m) \qquad\qquad \text{(electric motor)}$$

$$u = K_p(\frac{\tau}{k} - i) + K_I \int (\frac{\tau}{k} - i)dt \qquad\qquad \text{(electric motor drive system)}$$

$$\tau_i = \begin{cases} Ja_i + d(q(t_i)) + f(\dot{q}(t_i)) & \text{if } \dot{q}(t_i) \neq 0 \\ 0 & \text{if } \dot{q}(t_i) = 0 \end{cases} \qquad\qquad \text{(mechanical model)}$$

$$\tau = ki, \quad u_m = k\dot{q} \qquad\qquad \text{(electric - to - mechanical energy transformation)}$$

Input to the model is the joint acceleration $a_i$. The joint speed and position can be computed from $a_i$ by simple integration. In the energy model above no model of the controller hardware energy consumption is included. The brake engagement/disengagement time is here assumed to be zero.

When the motor is in steady state, i.e., $i$ is constant, the electric energy is given by $P = ui$, where $i = \tau/k$ and $u$

$= Ri$, i.e., $P = R\left(\frac{\tau}{k}\right)^2$. Clearly the static torque level when the robot is standing still has a great impact on the energy consumption, since it appears in square. It is therefore evident that the position where the robot stands still will be important for the total energy consumption. By applying the brakes it is possible to reduce the wasted energy when the robot is standing still. This is why the mechanical model in the energy model above has two distinct cases, one when the joint is moving and one when the joint is standing still. This model is however simplified since the brake engagement/disengagement is assumed to be instantaneous.

To solve the general optimization problem stated above a discrete version can be utilized where q(t) is parameterized so that acceleration is a free parameter in each interval, speed and position can then be computed as:

$$\dot{q}(t_i + \Delta_t) = \dot{q}(t_i) + a_i \Delta_t \qquad (3a)$$

$$q(t_i + \Delta_t) = q(t_i) + \dot{q}(t_i)\Delta_t + \frac{a_i \Delta_t^2}{2} \qquad (3b)$$

where $\Delta_t$ can be fixed or computed from $\dot{q}(t_i)$, $q(t_{i+1})$ and $a_i$ is the acceleration value used in the time interval $t_i$ to $t_{i+1}$. To simplify the solution it is also assumed that the current controller is significantly faster then the optimization step length, i.e., $\frac{d}{dt}i$ can be assumed to be zero at each optimization time instance. The optimization problem is now formulated as:

$$\min_{a} \sum_{i=0}^{N-1} u_i \cdot \tau_i$$

$$s.t.$$

$$u_i = R\frac{\tau_i}{k} + k\dot{q}(t_i) + \tilde{h}(\tau_i, \dot{q}(t_i))$$

$$\tau_i = \begin{cases} Ja_i + d(q(t_i)) + f(\dot{q}(t_i)) & \text{if } \dot{q}(t_i) \neq 0 \\ 0 & \text{if } \dot{q}(t_i) = 0 \end{cases}$$

$$\tau_{\min} \leq \tau_i \leq \tau_{\max}$$

$$a_{\min} \leq a_i \leq a_{\max}$$

$$t_N = T_{\max}$$

$$q(t_0) = q_0$$

$$\dot{q}(t_0) = \dot{q}_0$$

$$q(t_N) = q_N$$

$$\dot{q}(t_N) = \dot{q}_N$$

$$\dot{q}_{\min} \leq \dot{q}(t_i) \leq \dot{q}_{\max} \qquad (4)$$

In (4) the discrete optimization problem is formulated with a number of constraints, for example on the torque, the joint speed, and the joint acceleration. The criterion and the equations in the energy model are reformulated using $\tau = ki$, $u_m = k\dot{q}$ to be able to write down the optimization problem in a mathematical formulation. The motor model and the electric motor drive system are combined using the assumption that the current controller is significantly faster than the optimization time step. The torque is given by the system equation in (1). The constraints include maximum and minimum values on the torques and acceleration as well as boundary conditions on the angular position and angular velocity. The normal case would be that the angular speed is zero at the start time (to) and zero at the end time ($t_N$) but other values could also be included as well as constraints on the angular acceleration (start, end, and max/min values).

The delta time is assumed to be fixed to a sampling time $\Delta_t$ and the smaller this value the closer the solution comes to the true continuous optimum. Given the formulation in (4) the optimization problem can be solved using a standard general non-linear optimization algorithm, see for example Jorge Nocedal and Stephen J. Wright. Numerical Optimization, Springer. Series in Operations Research, 1999, ISBN 0-387-98793-2, and R. Fletcher. Practical Methods of Optimization. 1987. ISBN 0-471-91547-5. In (4) it is assumed that the brake is applied when the robot arm is standing still, since no torque is applied when $\dot{q}(t_i) = 0$.

Fully developed solution

In a fully developed case the motion of a robot with two or more degrees-of-freedom (DOF) robot is optimized with respect to the energy consumption. The optimization can be made according to the cases described previously, i.e.,

    1. the geometric path is given and only the dynamic can be affected in the optimization,

    2. only the start target and the end target are specified and the geometric path is free to choose in the optimization.

It is possible and useful to include cases where 1 and 2 are combined so that a geometric path is given where the robot can deviate from the path to some specified limit if it reduces the total energy consumption.

Both cases of the problem can be formulated in a similar way as in (4). In case 1 the geometry of the path is given and the optimization problem is to find a (scalar) speed profile along the geometry that minimizes the energy and brake engagement/disengagement time instances for each axis. In case 2 the geometry is not specified, except for the start and the end position. This case is similar to (4) where only the start and end point are specified and the acceleration is a free parameter. In case 2 of the fully developed solution the $a_i$ parameters are no longer scalars, instead each $a_i$ is a vector with the length equal to the number of actuated degrees-of-freedom of the considered robot. The optimization problem can still be formulated in a similar way as in (4) but some inequalities now become vector inequalities. The number of variables and the complexity of the solution grow also significantly with the increased number of degrees-of-freedom.

The present invention is not limited to the embodiments disclosed but may be varied and modified within the scope of the following claims. For example, the energy optimization could be turned on and off by a signal from an external unit, such as a PLC.

**Claims**

1. A method for reducing the energy consumption of an industrial robot configured to carry out work during a work cycle and comprising a manipulator having a plurality of arms that are movable relative each other about a plurality of axes and motors for actuating the movements of the axes, wherein the method comprises:

    - defining a model for the energy consumption of the robot dependent on the movements of the axes of robot, including a relation between the energy consumed due to friction and the speed of the axes, and the energy consumed due to gravity acting on the arms,
    - storing a control program specifying a geometric path to be followed by the robot when carrying out the work, and
    - determining robot movements during at least a part of the work cycle with regard to minimizing the energy consumption of the robot based on said control program and said model for the energy consumption of the robot, and
    - calculating reference values for the motors of the robot based on the determined robot movements, **characterized in** that
    - said model for the energy consumption is designed to consider the fact that the energy consumed due to gravity acting on the arms can be reduced during standstill of one or more of the axes if the axes are mechanically locked, and
    - said determining of the robot movements comprises calculating speed profiles for the axes of the robot when following the specified geometric path and determining whether or not an axis should be mechanically locked during standstill of the axis in order to reduce the energy consumption, based on said model for the energy consumption of the robot, and a maximum allowed time for carrying out the robot movement during said part of the work cycle, provided that it is permitted to complete the geometric path in a shorter time than the maximum allowed time.

2. The method according to claim 1, wherein said model for the energy consumption is designed to take into consideration the time for the engagement/disengagement of the mechanical lock.

3. The method according to claim 1 or 2, wherein the axes are mechanically locked by applying brakes to the motors of the robot.

4. The method according to any of the previous claims, wherein movements for the manipulator are determined with regard to minimizing the energy consumption during a part of the work cycle, and movements for the manipulator are determined with regard to minimizing the time it takes for the robot to carry out the work during another part of the work cycle, and that reference values for the motors of the robot are calculated based on the robot movements determined with regard to minimizing the energy consumption of the robot as well as with regard to minimizing the time it takes for the robot to carry out the work.

5. The method according to any of the previous claims, wherein the control program includes instructions for switching on and off the minimizing of the energy consumption of the robot during the work cycle.

6. The method according to any of the previous claims, wherein the method comprises:

   - calculating the energy reduction achieved by determining the movements of the manipulator with regard to minimizing the energy consumption of the robot instead of with regard to minimizing the cycle time, and
   - displaying the calculated energy reduction.

7. The method according to any of the previous claims, wherein robot comprises drive units that control the motors by converting DC current to a variable alternating current in dependence on said reference values for the motors, and said model for the energy consumption of the robot includes a model of the energy consumption of mechanical parts of the manipulator, a model of the energy consumption of the motors, and a model of the energy consumption of the drive units.

8. An industrial robot system comprising a robot including a manipulator (8) having a plurality of arms that are movable relative each other about a plurality of axes and motors for actuating the movements of the axes, and a program storage (10) for storing a control program specifying a geometric path to be followed by the robot when carrying out the work during a work cycle,

   - data storage (34) storing a model for the energy consumption of the robot depending on the movements of the axes of robot, said model including a relation between the energy consumed due to friction and the speed of the axes, and the energy consumed due to gravity acting on the arms, and
   - an energy optimization module (32) configured to determine, for at least a part of the work cycle, movements for the manipulator with regard to minimizing the energy consumption of the robot based on said control program and said model for the energy consumption of the robot, and
   - a computing unit (21) configured to calculate reference values for the motors of the robot based on the determined robot movements, **characterized in that** said data storage is adapted to store a model for the energy designed to consider the fact that the energy consumed due to gravity acting on the arms can be reduced during standstill of one or more of the axes if the axes are mechanically locked, and
   - said energy optimization module is configured to calculate speed profiles for the axes of the robot when following the specified geometric path and to determine whether or not an axis should be mechanically locked during standstill in order to reduce the energy consumption, based on said model for the energy consumption of the robot, and a maximum allowed time for carrying out the robot movement during said part of the work cycle, provided that it is permitted to complete the geometric path in a shorter time than the maximum allowed time.

9. The robot system according to claim 8, wherein the system comprises a time optimization module (30) configured to determine, for at least a part of the work cycle, movements for the manipulator with regard to minimizing the time it takes for the robot to carry out the work based on a dynamic model of the robot, the system is configured to upon command switch between minimizing the time it takes for the robot to carry out the work and minimizing the energy consumption of the robot during one work cycle, and said computing unit is configured to calculate reference values for the motors of the robot based on the robot movements determined with regard to minimizing the energy consumption of the robot as well as with regard to minimizing the time it takes for the robot to carry out the work.

10. The robot system according to claim 9, wherein the control program includes instructions for switching between minimizing the time it takes for the robot to carry out the work and minimizing the energy consumption of the robot during the work cycle, and the system is configured to switch between time and energy optimization based on the instructions in the robot program.

11. The robot system according to any of the claims 8 - 10, wherein the system comprises an external computer (40) for off-line programming of the robot and a robot controller (50,54) for controlling the movements of the manipulator, said energy optimization module (32) is configured to generate an energy optimized control program, the energy optimization module is stored on the external computer, and the computing unit (21) is stored on the robot controller.

12. The robot system according to any of the claims 8 - 11, wherein the system comprises a robot controller (50,54) including a path planner adapted to determine how the manipulator should move based on the control program, and said energy optimization module (32) and the computing unit (21) are parts of the path planner.

**Patentansprüche**

1. Verfahren zum Verringern des Energieverbrauchs eines Industrieroboters, der dafür konfiguriert ist, Arbeit während eines Arbeitszyklus auszuführen, und einen Manipulator umfasst, der mehrere Arme, welche um mehrere Achsen relativ zueinander bewegbar sind, und Motoren zum Auslösen der Bewegungen der Achsen aufweist, wobei das Verfahren das Folgende umfasst:

- Definieren eines Modells für den Energieverbrauch des Roboters in Abhängigkeit von den Bewegungen der Roboterachsen, welches eine Beziehung zwischen der Energie, die aufgrund von Reibung und aufgrund der Geschwindigkeit der Achsen verbraucht wird, und der Energie umfasst, die aufgrund dessen verbraucht wird, dass die Schwerkraft auf die Arme wirkt,
- Speichern eines Steuerprogramms, welches einen geometrischen Weg spezifiziert, dem der Roboter zu folgen hat, wenn er die Arbeit ausführt, und
- Ermitteln von Roboterbewegungen zumindest während eines Teils des Arbeitszyklus im Hinblick auf das Minimieren des Energieverbrauchs des Roboters, basierend auf dem Steuerprogramm und dem Modell für den Energieverbrauch des Roboters, und
- Berechnen von Referenzwerten für die Motoren des Roboters, basierend auf den ermittelten Roboterbewegungen, **dadurch gekennzeichnet, dass**
- das Modell für den Energieverbrauch so ausgestaltet ist, dass die Tatsache berücksichtigt wird, dass die Energie, die aufgrund der Schwerkraft verbraucht wird, die auf die Arme wirkt, während des Stillstands einer oder mehrerer der Achsen verringerbar ist, wenn die Achsen mechanisch verriegelt werden, und
- das Ermitteln der Roboterbewegungen das Berechnen von Geschwindigkeitsprofilen für die Achsen des Roboters, wenn er dem spezifizierten geometrischen Weg folgt, und das Ermitteln umfasst, ob eine Achse während des Stillstands der Achse zur Verringerung des Energieverbrauchs mechanisch verriegelt werden sollte oder nicht, basierend auf dem Modell für den Energieverbrauch des Roboters und einer maximalen zulässigen Zeit zum Durchführen der Roboterbewegung während des Teils des Arbeitszyklus, vorausgesetzt, dass es zulässig ist, den geometrischen Weg in einer kürzeren Zeit als der maximalen zulässigen Zeit zurückzulegen.

2. Verfahren nach Anspruch 1, wobei das Modell für den Energieverbrauch so ausgestaltet ist, dass die Zeit für das Feststellen/Lösen der mechanischen Verriegelung berücksichtigt wird.

3. Verfahren nach Anspruch 1 oder 2, wobei die Achsen durch Anlegen von Bremsen an die Motoren des Roboters mechanisch verriegelt werden.

4. Verfahren nach einem der vorhergehenden Ansprüche, wobei Bewegungen für den Manipulator im Hinblick auf das Minimieren des Energieverbrauchs während eines Teils des Arbeitszyklus ermittelt werden, und Bewegungen für den Manipulator im Hinblick auf das Minimieren der Zeit ermittelt werden, die der Roboter benötigt, um die Arbeit während eines anderen Teils des Arbeitszyklus auszuführen, und wobei Referenzwerte für die Motoren des Roboters basierend auf den Roboterbewegungen berechnet werden, die im Hinblick auf das Minimieren des Energieverbrauchs des Roboters sowie im Hinblick auf das Minimieren der Zeit ermittelt werden, die der Roboter benötigt, um die Arbeit auszuführen.

5. Verfahren nach einem der vorhergehenden Ansprüche, wobei das Steuerprogramm Befehle zum Ein- und Ausschalten des Minimierens des Energieverbrauchs des Roboters während des Arbeitszyklus umfasst.

**6.** Verfahren nach einem der vorhergehenden Ansprüche, wobei das Verfahren das Folgende umfasst:

- Berechnen der erreichten Energiereduktion durch Ermitteln der Bewegungen des Manipulators im Hinblick auf das Minimieren des Energieverbrauchs des Roboters statt im Hinblick auf das Minimieren der Zykluszeit und
- Anzeigen der berechneten Energiereduktion.

**7.** Verfahren nach einem der vorhergehenden Ansprüche, wobei der Roboter Antriebseinheiten umfasst, welche die Motoren durch Umwandeln von Gleichstrom in einen variablen Wechselstrom in Abhängigkeit von den Referenzwerten für die Motoren steuern und das Modell für den Energieverbrauch des Roboters ein Modell des Energieverbrauchs mechanischer Teile des Manipulators, ein Modell des Energieverbrauchs der Motoren und ein Modell des Energieverbrauchs der Antriebseinheiten umfasst.

**8.** Industrieroboter system, welches einen Roboter umfasst, der einen Manipulator (8), der mehrere Arme, die um mehrere Achsen relativ zueinander bewegbar sind, und Motoren zum Auslösen der Bewegungen der Achsen aufweist, und einen Programmspeicher (10) zum Speichern eines Steuerprogramms umfasst, welches einen geometrischen Weg spezifiziert, dem der Roboter zu folgen hat, wenn er die Arbeit während eines Arbeitszyklus ausführt,

- einen Datenspeicher (34), in welchem ein Modell für den Energieverbrauch des Roboters in Abhängigkeit von den Bewegungen der Roboterachsen gespeichert ist, wobei das Modell eine Beziehung zwischen der Energie, die aufgrund von Reibung und aufgrund der Geschwindigkeit der Achsen verbraucht wird, und der Energie umfasst, die aufgrund dessen verbraucht wird, dass die Schwerkraft auf die Arme wirkt, und
- ein Energieoptimierungsmodul (32), welches dafür konfiguriert ist, zumindest für einen Teil des Arbeitszyklus Bewegungen für den Manipulator im Hinblick auf das Minimieren des Energieverbrauchs des Roboters basierend auf dem Steuerprogramm und dem Modell für den Energieverbrauch des Roboters zu ermitteln, und
- eine Berechnungseinheit (21), welche dafür konfiguriert ist, Referenzwerte für die Motoren des Roboters basierend auf den ermittelten Roboterbewegungen zu berechnen, **dadurch gekennzeichnet, dass** der Datenspeicher dafür angepasst ist, ein Modell für die Energie zu speichern, welches so ausgestaltet ist, dass die Tatsache berücksichtigt wird, dass die Energie, die aufgrund der Schwerkraft verbraucht wird, die auf die Arme wirkt, während des Stillstands einer oder mehrerer der Achsen verringerbar ist, wenn die Achsen mechanisch verriegelt werden, und
- das Energieoptimierungsmodul dafür konfiguriert ist, Geschwindigkeitsprofile für die Achsen des Roboters zu berechnen, wenn er dem spezifizierten geometrischen Weg folgt, und zu ermitteln, ob eine Achse während des Stillstands der Achse zur Verringerung des Energieverbrauchs mechanisch verriegelt werden sollte oder nicht, basierend auf dem Modell für den Energieverbrauch des Roboters und einer maximalen zulässigen Zeit zum Durchführen der Roboterbewegung während des Teils des Arbeitszyklus, vorausgesetzt, dass es zulässig ist, den geometrischen Weg in einer kürzeren Zeit als der maximalen zulässigen Zeit zurückzulegen.

**9.** Robotersystem nach Anspruch 8, wobei das System ein Zeitoptimierungsmodul (30) umfasst, welches dafür konfiguriert ist, zumindest für einen Teil des Arbeitszyklus Bewegungen für den Manipulator im Hinblick auf das Minimieren der Zeit zu ermitteln, die der Roboter benötigt, um die Arbeit auszuführen, basierend auf einem dynamischen Modell des Roboters, das System dafür konfiguriert ist, auf Befehl zwischen dem Minimieren der Zeit, die der Roboter benötigt, um die Arbeit auszuführen, und dem Minimieren des Energieverbrauch des Roboter während eines Arbeitszyklus umzuschalten, und die Berechnungseinheit dafür konfiguriert ist, Referenzwerte für die Motoren des Roboters basierend auf den Roboterbewegungen zu berechnen, die im Hinblick auf das Minimieren des Energieverbrauchs des Roboters sowie im Hinblick auf das Minimieren der Zeit ermittelt werden, die der Roboter benötigt, um die Arbeit auszuführen.

**10.** Robotersystem nach Anspruch 9, wobei das Steuerprogramm Befehle zum Umschalten zwischen dem Minimieren der Zeit, die der Roboter benötigt, um die Arbeit auszuführen, und dem Minimieren des Energieverbrauchs des Roboters während des Arbeitszyklus umfasst und das System dafür konfiguriert ist, basierend auf den Befehlen in dem Roboterprogramm zwischen Zeit- und Energieoptimierung umzuschalten.

**11.** Robotersystem nach einem der Ansprüche 8 bis 10, wobei das System einen externen Computer (40) zum prozessentkoppelten Programmieren des Roboters und eine Robotersteuerung (50, 54) zum Steuern der Bewegung des Manipulators umfasst, das Energieoptimierungsmodul (32) dafür konfiguriert ist, ein energieoptimiertes Steuerprogramm zu erzeugen, das Energieoptimierungsmodul auf dem externen Computer gespeichert ist und die Berechnungseinheit (21) in der Robotersteuerung gespeichert ist.

**12.** Robotersystem nach einem der Ansprüche 8 bis 11, wobei das System eine Robotersteuerung (50, 54) umfasst, welche einen Wegplaner umfasst, der dafür angepasst ist, basierend auf dem Steuerprogramm zu ermitteln, wie sich der Manipulator bewegen sollte, und das Energieoptimierungsmodul (32) und die Berechnungseinheit (21) Teile des Wegplaners sind.

## Revendications

**1.** Procédé de réduction de la consommation d'énergie d'un robot industriel configuré pour effectuer du travail pendant un cycle de travail et comprenant un manipulateur ayant une pluralité de bras qui sont mobiles l'un par rapport à l'autre autour d'une pluralité d'axes et des moteurs pour actionner les mouvements des axes, procédé dans lequel :

- on définit un modèle pour la consommation d'énergie du robot en fonction des mouvements des axes du robot, comprenant une relation entre l'énergie consommée due au frottement et la vitesse des axes et l'énergie consommée due à la force de gravité agissant sur les bras,
- on mémorise un programme de commande précisant un trajet géométrique à suivre par le robot lorsqu'il est effectue le travail, et
- on détermine des mouvements du robot pendant au moins une partie du cycle de travail en vue de minimiser la consommation d'énergie du robot sur la base du programme de commande et du modèle pour la consommation d'énergie du robot, et
- on calcule des valeurs de référence pour les moteurs du robot sur la base des mouvements déterminés du robot, **caractérisé en ce que**
- le modèle pour la consommation d'énergie est conçu pour considérer le fait que l'énergie consommée due à la force de gravité agissant sur les bras peut être réduite pendant l'arrêt d'un ou de plusieurs des axes si les axes sont verrouillés mécaniquement, et
- la détermination des mouvements du robot comprend calculer des profils de vitesse pour les axes du robot lorsque l'on suit le trajet géométrique précisé et déterminer si ou non un axe doit être verrouillé mécaniquement pendant un arrêt de l'axe afin de réduire la consommation d'énergie sur la base du modèle pour la consommation d'énergie du robot et un temps maximum alloué pour effectuer le mouvement du robot pendant cette partie du cycle de travail, pourvu qu'il soit permis de compléter le trajet géométrique en un temps plus court qu'un temps alloué maximum.

**2.** Procédé suivant la revendication 1, dans lequel le modèle pour la consommation d'énergie est conçu pour prendre en considération le temps de verrouillage/déverouillage du verrou mécanique.

**3.** Procédé suivant la revendication 1 ou 2, dans lequel les axes sont verrouillés mécaniquement en appliquant des freins au moteur du robot.

**4.** Procédé suivant l'une quelconque des revendications précédentes, dans lequel des mouvements du manipulateur sont déterminés au regard de la minimisation de la consommation d'énergie pendant une partie du cycle de travail et des mouvements pour le manipulateur sont déterminés en regard de la minimisation du temps qu'il faut pour que le robot effectue le travail pendant une autre partie du cycle de travail et en ce que des valeurs de référence pour des moteurs du robot sont calculées sur la base des mouvements du robot déterminés en regard de la minimisation de la consommation d'énergie du robot ainsi qu'en regard de la minimisation du temps qu'il faut pour que le robot effectue le travail.

**5.** Procédé suivant l'une quelconque des revendications précédentes, dans lequel le programme de commande comprend des instructions pour brancher et débrancher la minimisation de la consommation d'énergie du robot pendant le cycle de travail.

**6.** Procédé suivant l'une quelconque des revendications précédentes, dans lequel le procédé comprend :

- calculer la réduction d'énergie obtenue en déterminant les mouvements du manipulateur en regard de la minimisation de la consommation d'énergie du robot au lieu que se soit en regard de la minimisation du temps de cycle, et
- afficher la réduction d'énergie calculée.

**7.** Procédé suivant l'une quelconque des revendications précédentes, dans lequel le robot comprend des unités d'entraînement, qui commande des moteurs en transformant du courant continu en un courant alternatif variable en fonction des valeurs de référence pour les moteurs et le modèle de la consommation d'énergie du robot comprend un modèle de la consommation d'énergie de parties mécaniques du manipulateur, un modèle de la consommation d'énergie des moteurs et un modèle de la consommation d'énergie des unités d'entraînement.

8. Système de robot industriel comprenant un robot comprenant un manipulateur (8) ayant une pluralité de bras qui sont mobiles les uns par rapport aux autres autour d'une pluralité d'axes et des moteurs pour actionner les mouvements des axes et une mémoire (10) de programme pour mémoriser un programme de commande précisant un trajet géométrique à suivre par le robot lorsqu'il effectue le travail pendant un cycle de travail,

    - une mémoire (34) de données mémorisant un modèle pour la consommation d'énergie du robot en fonction du mouvement des axes de robot, le modèle comprenant une relation entre l'énergie consommée due au frottement et à la vitesse des axes et l'énergie consommée due à la force de gravité agissant sur les bras, et
    - un module (32) d'optimisation d'énergie, configuré pour déterminer pour au moins une partie du cycle de travail des mouvements du manipulateur en regard de la minimisation de la consommation d'énergie du robot sur la base du programme de commande et du modèle pour la consommation d'énergie du robot, et
    - une unité (21) informatique configurée pour calculer des valeurs de référence pour les moteurs du robot sur la base des mouvements déterminée du robot, **caractérisé en ce que** la mémoire de données est conçue pour mémoriser un modèle pour l'énergie, conçu pour considérer le fait que l'énergie consommée due à la force de gravité agissant sur les bras peut être réduite pendant un arrêt d'un ou de plusieurs des axes si les axes sont verrouillés mécaniquement, et
    - le module d'optimisation d'énergie est configuré pour calculer les profils de vitesse pour les axes du robot lorsque l'on suit le trajet géométrique précisé et pour déterminer si ou non un axe doit être verrouillé mécaniquement pendant un arrêt afin de réduire la consommation d'énergie, sur la base de ce modèle pour la consommation d'énergie du robot, et un temps maximum alloué pour effectuer le mouvement du robot pendant cette partie du cycle de travail, pourvu qu'il soit permis d'achever le trajet géométrique en un temps plus court que le temps maximum alloué.

9. Système de robot suivant la revendication 8, dans lequel le système comprend un module (30) d'optimisation du temps, configuré pour déterminer, pour au moins une partie du cycle de travail, des mouvements pour le manipulateur en regard de la minimisation du temps qu'il faut pour que le robot effectue le travail sur la base d'un modèle dynamique du robot, le système est configuré pour, sur instruction, commuter entre minimiser le temps qu'il faut pour que le robot effectue le travail et minimiser la consommation d'énergie du robot pendant un cycle de travail, et l'unité informatique est configurée pour calculer les valeurs de référence pour les moteurs du robot sur la base des mouvements du robot déterminés en regard de la minimisation de la consommation d'énergie du robot, ainsi qu'en regard de la minimisation du temps qu'il faut pour que le robot effectue le travail.

10. Système de robot suivant la revendication 9, dans lequel le programme de commande comprend des instructions pour commuter entre minimiser le temps qu'il faut pour que le robot effectue le travail et minimiser la consommation d'énergie du robot pendant le cycle de travail et le système est configuré pour commuter entre l'optimisation de temps et l'optimisation d'énergie sur la base des instructions du programme du robot.

11. Système de robot suivant l'une quelconque des revendications 8 à 10, dans lequel le système comprend un ordinateur (40) extérieur pour la programmation hors ligne du robot et une unité (50, 54) de commande du robot pour commander les mouvements du manipulateur, le module (32) d'optimisation d'énergie étant configuré pour produire un programme de commande optimisé d'énergie, le module d'optimisation d'énergie étant mémorisé sur l'ordinateur extérieur et l'unité (21) informatique étant mémorisée sur l'unité de commande du robot.

12. Système de robot suivant l'une quelconque des revendications 8 à 11, dans lequel le système comprend une unité (50, 54) de commande du robot, comprenant un planificateur de trajet conçu pour déterminer comment le manipulateur doit se déplacer sur la base du programme de commande et le module (32) d'optimisation d'énergie et l'unité (21) informatique font partis du planificateur du trajet.

Fig. 1

Fig. 2

Fig. 3

*Fig. 4*

Fig. 5

40

Robot
program

↓

Program
interpreter

↓

Energy
optimization
on?

No → No action

Yes

Program
block

↓

Robot system
energy model ↔ Energy optimized
trajectory
generation

Robot kinematic
model

Robot dynamic
model

Drive system
model

↓

Energy optimized
program block

*Fig. 6*

*Fig. 7*

54

```
                          ┌──────────────┐
                          │    Robot     │──── 10
                          │   program    │
                          └──────────────┘
                                 │
                                 ▼
                          ┌──────────────┐
                          │   Program    │──── 12
                          │ interpreter  │
                          └──────────────┘
                                 │
       30                        ▼
  ┌──────────────┐         ◇────────────◇
  │Time optimized│   No   ╱    Energy     ╲
  │  trajectory  │◄───────    optimization  
  │  generation  │         ╲     on?      ╱
  └──────────────┘         ◇────────────◇
                                 │                          ┌──────────────┐
                                 │ Yes                      │Robot kinematic│──── 18
                                 │                          │    model      │
       34                        ▼                          └──────────────┘
  ┌──────────────┐  56   ┌──────────────┐
  │ Robot system │       │Energy optimized│                 ┌──────────────┐
  │ energy model │◄─────►│  trajectory   │◄────────────────►│Robot dynamic │──── 19
  └──────────────┘       │  generation   │                  │    model     │
                         └──────────────┘                   └──────────────┘
                                 │
                                 ▼                          ┌──────────────┐
                         ┌──────────────┐                   │ Drive system │──── 20
                         │  Computing   │──── 21            │    model     │
                         │    motor     │◄─────────────────►└──────────────┘
                         │  references  │
                         └──────────────┘
                                 │
                                 ▼
                         ┌──────────────┐
                         │ Drive system │──── 22
                         └──────────────┘
                                 │
                                 ▼
                                 8
```

*Fig. 8*

*Fig. 9*

*Fig. 10*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1705541 A

**Non-patent literature cited in the description**

- **ANDRE R HIRAKAWA ; ATSUO KAWAMURA.** Trajectory generation for redundant manipulators under optimization of consumed electrical energy. *conference record of the 1996 IEEE Application conference,* 06 October 1996, vol. 3, 1626-1632
- **CANUDAS DE WIT, C. ; OLSSON, H. ; ÅSTRÖM, K. ; LISCHINSKY, P.** A new model for control of systems with friction. *IEEE Transactions on Automatic Control,* 1995, vol. 40 (3), 419-425
- **B. FEENY ; F. MOON.** Chaos in a forced dry-friction oscillator: Experiments and numerical modelling. *Journal of Sound and Vibration,* 1994, vol. 170 (3), 303-323
- **JORGE NOCEDAL ; STEPHEN J. WRIGHT.** Numerical Optimization. Springer. Series in Operations Research, 1999
- **R. FLETCHER.** *Practical Methods of Optimization,* 1987, ISBN 0-471-91547-5